# EUROPEAN PATENT SPECIFICATION

(11) **EP 1 625 708 B1**
(45) Date of publication and mention of the grant of the patent: **26.08.2015**
(21) Application number: 04785553.1
(22) Date of filing: 13.05.2004
(51) Int. Cl.: H04L 12/28, H04L 29/06, H04W 36/14, H04L 29/08

(54) **MANAGING HANDOFFS OF MEDIA SESSIONS AMONG SERVICE PROVIDERS**
VERWALTUNG VON WEITERREICHUNGEN VON MEDIA-SITZUNGEN ZWISCHEN DIENSTANBIETERN
GESTION DES TRANSFERTS DE SESSIONS MEDIA PARMI DES FOURNISSEURS DE SERVICES

(30) Priority: 19.05.2003 US 471851 P; 30.10.2003 US 698815
(43) Date of publication of application: 15.02.2006
(73) Proprietor: HEWLETT-PACKARD DEVELOPMENT COMPANY, L.P., Houston, TX 77070 (US)
(72) Inventor: ROY, Sumit, c/o Hewlett-Packard, Menlo Park, CA 94304 (US); SHEN, Bo, Fremont, CA 94539 (US); ANKCORN, John, Palo Alto, CA 94306 (US); APOSTOLOPOULOS, John G,, Palo Alto, CA 94303 (US); COVELL, Michele, Palo Alto, CA 94306 (US); HARVILLE, Michael, Palo Alto, CA 94306 (US); TAN, Wai-tian, Sunnyvale, CA 94087 (US); WEE, Susie, J., c/o Hewlett-Packard Company, Palo Alto, CA 94304 (US)
(74) Representative: Zimmermann, Tankred Klaus
(86) International application number: PCT/US2004/015188
(87) International publication number: WO 2004/105313

(56) References cited:
- US-A1- 2002 082 015
- US-A1- 2002 193 110
- ROY S ET AL: "APPLICATION LEVEL HAND-OFF SUPPORT FOR MOBILE MEDIA TRANSCODING SESSIONS" PROCEEDINGS OF THE 12TH. INTERNATIONAL WORKSHOP ON NETWORK AND OPERATING SYSTEMS SUPPORT FOR DIGITAL AUDIO AND VIDEO. NOSSDAV 2002. MIAMI, FL, MAY 12 - 14, 2002, PROCEEDINGS OF THE INTERNATIONAL WORKSHOP ON NETWORK AND OPERATING SYSTEM SUPPORT FOR DI, 12 May 2002 (2002-05-12), pages 95-104, XP001171542 ISBN: 1-58113-512-2
- MARCUS BRUNNET A.O.: "Requirements for QoS Signaling Protocols" DRAFT-BRUNNER-NSIS-REQ-00.TXT, November 2001 (2001-11), pages 1-27, XP015000386
- R. BAGRODIA, A.O.: "iMASH: Interactive Mobile Application Session Handoff" MOBISYS 2003, 8 May 2003 (2003-05-08), pages 1-14, XP002303521 SAN FRANCISO, CA, USA

## Description

### RELATED U.S. APPLICATION

This application claims the benefit of copending U.S. Provisional Patent Application No. 60/471,851, filed 5/19/2003, entitled "Architecture for Distributing and Managing Streaming Media Services."

### TECHNICAL FIELD

Embodiments of the present invention pertain to servicing and delivery of content over a network.

### BACKGROUND ART

Typically, people learn of content sites (e.g., a video-based movie web page) based on their web browsing experiences using their desktop or laptop machines, since these devices are well suited to the input (e.g., Uniform Resource Locators or search queries) and output (e.g., reliable, high-bandwidth connections) requirements associated with web browsing. Once such sites are located, web users may subsequently try to connect to them using mobile devices such as video-enabled personal digital assistants (PDAs) or cell phones.

To accommodate the diversity in user (client) devices, content providers have to be able to support a wide range of different bit rates (according to the bandwidth of the connection), video frame rates (according to the processing power available at the client device, which itself varies dynamically according to power management strategies employed by the client device), video frame sizes (according to the display size available at the client device), or the like.

One way to address these problems is to endow the network with the ability to transcode media data as it is streamed, so that it arrives at a client device in a format that is tailored to the client device. In other words, processing is performed by the network on art input media content stream, so that an output content stream is produced with a different bit rate, video frame rate, video frame size, or other parameters, that makes the output content stream more amenable to consumption on the client device. This transcoding operation may be thought of as a service provided by the network. More generally, one might imagine that other types of media processing and analysis might also be performed within the network, so that modified content, or data derived from content available through the network, can be delivered to client devices. The ability to provide this sort of functionality in a network would enable the construction of a wide variety of useful services based on media content input, and these services could be provided for consumption by end users with access to the network.

Thus, a method and/or system that can deliver content, as well as content that results from the processing or analysis of other content, to a large number of clients would be valuable. A method and/or system that can accomplish this for diverse clients, without network congestion and the resulting degradation in the quality of the delivered content, would also be of value.

US 2002/0082015 A1 describes a method and system for transferring a communication session from one service area to another service area, wherein each service area is associated with a transcoding proxy for transcoding communication sessions established in said service area to and from a format suitable for a mobile device. A gateway server relays the communication session from a content server via the appropriate transcoding proxy to the mobile device. When the mobile device moves to the second service area, the second transcoding proxy is contacted and session handling is transferred thereto. The transfer operation is transparent to the content server so that the session between the mobile device and the content server stays intact. Said document also describes a mobile assistant server, a transcoding proxy and a mobile device for use in said system.

The document "Application Level Hand-off support for Mobile Media Transcoding Sessions", Roy S et all, ISBN 1- 58113-512-2, discloses a method and system for application level hand-off for mobile media sessions and proposes handoff schemes to provide load balancing and in conditions of overload.

### SUMMARY OF THE INVENTION

A method and system for managing handoff of media service sessions among service providers in a network are disclosed. Information associated with the media service sessions is received at a service manager. The information at the service manager is used to determine whether to initiate a handoff of any of the media service sessions from a service provider to another service provider. Moreover, if it is determined to initiate the handoff, the handoff is initiated.

The invention is defined in independent method claim 1, indepoendent system claim 4 and independent apparatus claim 8.

### BRIEF DESCRIPTION OF THE DRAWINGS

The accompanying drawings, which are incorporated in and form a part of this specification, illustrate embodiments of the invention and, together with the description, serve to explain the principles of the invention:
Figure 1 is a block diagram showing information flow in and out of a system for servicing and delivering content to a client device according to one embodiment of the present invention.
Figure 2A is a block diagram showing information flow in and out of a system for servicing and delivering content to a client device according to another embodiment of the present invention.
Figure 2B is a block diagram showing information flow in and out of a system for servicing and delivering content to a client device according to yet embodiment of the present invention.
Figure 3 illustrates a method for servicing and delivering content according to one embodiment of the present invention.
Figure 4 illustrates a method for managing the servicing of content according to one embodiment of the present invention.
Figure 5A illustrates a system for managing handoff of media service sessions among service providers in accordance with an embodiment of the present invention.
Figure 5B illustrates a block diagram showing a service location manager in accordance with an embodiment of the present invention.
Figure 6 illustrates a content delivery network that can operate with the system of Figure 5A in accordance with an embodiment of the present invention.
Figure 7 illustrates a flow chart showing a method of managing handoff of media service sessions among service providers in accordance with an embodiment of the present invention.

The drawings referred to in this description should not be understood as being drawn to scale except if specifically noted.

### DETAILED DESCRIPTION OF THE INVENTION

Reference will now be made in detail to embodiments of the present invention, examples of which are illustrated in the accompanying drawings. While the invention will be described in conjunction with these embodiments, it will be understood that they are not intended to limit the invention to these embodiments. On the contrary, the invention is intended to cover alternatives, modifications and equivalents, which may be included within the scope of the invention as defined by the appended claims. Furthermore, in the following detailed description of the present invention, numerous specific details are set forth in order to provide a thorough understanding of the present invention.

### ESTABLISHING MEDIA SERVICE SESSIONS

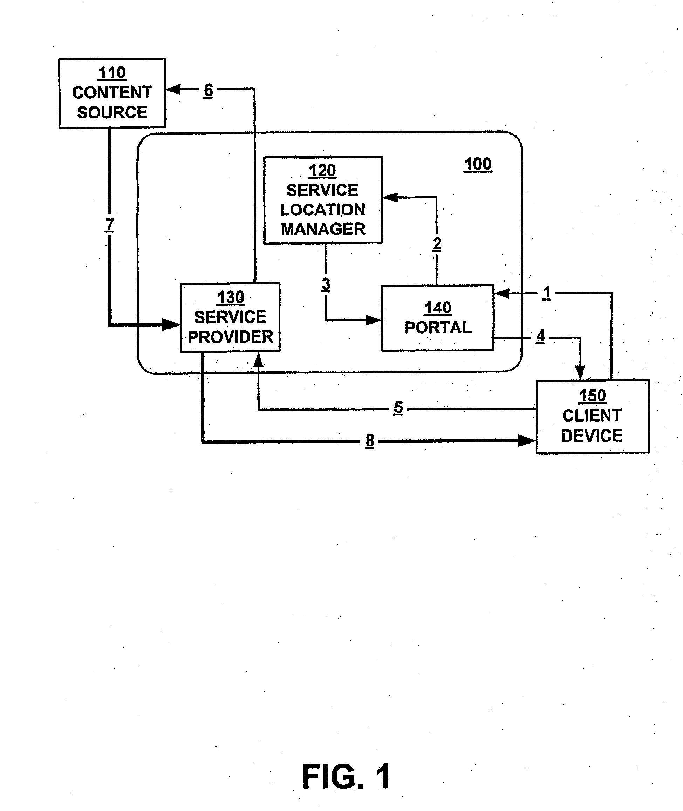

Figure 1 is a block diagram of a system 100 for servicing content from a content source 110 and for delivering the service result to a client device 150 according to one embodiment of the present invention. In overview, a client device 150 seeking a service contacts system 100 (e.g., portal 140). The client device 150 is redirected to a provider of the service (e.g., service provider 130). Content from a content source (e.g., content source 110) is sent (e.g., streamed) to the client device via the service provider. Thus, in one embodiment, system 100 is for streaming media from a content source to a client device.

For purposes of the present application, streaming media as used herein means data that is communicated between network nodes in a continual manner. Examples include streaming audio and video, which may have strict time constraints on delivery. In these examples, if portions of these streams are delivered too late, the portions will be ignored due to tardiness (they are too late to affect what is being played by the client application and are therefore largely useless). Alternately, if portions of these streams are delivered too early, they will be lost due to buffer constraints within the service or client application. Other examples of data that is transmitted in a continual manner include streams of measurements or streams of experimental results. These types of streams include weather readings from remote sensors and temperature readings from cooling systems. In these examples, there are no strict time constraints on the delivery; however, the data transmission has a temporal component that is best served by seamlessly ongoing transmissions.

As such, by using streaming media, the effect of service placement has a long-lived effect on resources of both the network and the server nodes. For example, in transcoding a movie for viewing under streaming conditions, the data will span as much as two hours and therefore the transcoding session may span as much as two hours of the server time. For other types of streaming (e.g., instrument readings), the duration of the stream and of the service being done on the stream can be never-ending. The computational resources of the server node are affected for long periods of time with uncertain durations. Similarly, the network resources at the server node, on all the links between the server and the content provider, and between the server and the client machine, will be affected for long periods of time with uncertain durations. This is in marked contrast to more classic network transactions in which the data transfer is done in a block, often in less than seconds or, minutes and in which the service performed on that data has a constrained duration.

In an embodiment that deals with streaming media, the following are some of the issues that need to be considered; that is, in comparison to web-based distribution, and web-based business transactions and/or downloads, streaming media has the following characteristics that need to be addressed:
a large amount of data - the end point of the data may not be known, and caching a number of items of content can consume significant memory resources;
time-ordered data - the temporal order in which data is received can be important;
access may not be carried through to completion -for example, only some portion of an item of content may be accessed (e.g., the first couple of minutes of a full-length movie);
bandwidth needed cannot be determined without some degree of understanding of the subject media - for example, one video file may be at a high spatial resolution, and another video file may not, and so while the files, both being video files, may appear to be the same, their respective bandwidth may be quite different;
jitter in latency or bandwidth can be problematic - a consistent latency may be acceptable, but latency that varies considerably during a session can be problematic because of buffer overflow or underflow;
inadequate computation or bandwidth resources can make results useless due to time constraints;
data is typically encoded (compressed), and so loss or lateness of some part of the data can have consequences on subsequent data decoding (decompression);
lost data is not typically retransmitted due to time constraints; and
a record of state should be maintained for all client devices - for streaming media, the streaming node needs to continue streaming data, and cannot wait to receive state information from clients.

The result of these differences is to greatly increase the need for management and monitoring of services performed on streaming media

In the present embodiment, system 100 includes a service location manager 120, a service,provider 130 and a portal 140. The service location manager 120, the service provider 130 and the portal 140 are logical entities that can be implemented on a single device or using multiple devices. Thus, system 100 can be representative of, for example, a single computer system that implements the functionality of service location manager 120, service provider 130 and portal 140. Alternatively, system 100 can encompass different nodes or devices in a computer system network. These nodes may be server computer systems, switches, routers or the like, having processing and memory capabilities sufficient to perform the various functionalities to be described herein. Generally speaking, the functionality provided by system 100 can be implemented using one or more devices. Furthermore, although system 100 is described for a single service location manager 120, service provider 130 and portal 140, there can be more than one of any of those elements.

System 100 can be implemented in an existing computer system network by overlaying the functionality of service location manager 120, service provider 130 and/or portal 140 onto the existing network. That is to say, all or a part of the functionality provided by system 100 can be incorporated into existing network nodes. Alternatively, all or part of system 100 can be implemented by adding nodes into an existing network. For example, existing content sources and portals may be used, with nodes added for servicing content and for managing service providers.

In the present embodiment, system 100 can communicate with a content source 110 and a client device 150. Although described for a single content source 110 and client device 150, there can be more than one of each of those elements. Communication between system 100, content source 110 and client device 150, as well as communication within system 100, can be wireless.

Client device 150 can be virtually any kind of user device such as, but not limited to, a desktop or laptop computer system, or a video-enabled handheld computer system (e.g., a portable digital assistant) or cell phone. In general, client device 150 is used to request and subsequently receive an item of content.

An item of content refers to media or non-media data that can be live or recorded. An item of content can include, but is not limited to, video-based data, audio-based data, image-based data, web page-based data, graphic data, text-based data or some combination thereof. For example, an item of content can be a movie of digital video disk (DVD) quality.

A type of service may need to be performed on the item of content before the content is provided to client device 150. Types of services can include the processing of an item of content and/or the analysis of an item of content. For example, types of services can include video processing such as, but not limited to, transcoding, jitter removal, dynamic clipping and cropping basted on facial recognition, video analysis, resizing of the video, optical character reading from video, background removal, and the like. Additionally, types of services can include audio processing such as, but not limited to, background removal, audio enhancement, audio speed up or slow down, audio enhancement, noise reduction, speech recognition, audio analysis, and the like. The analysis of an item of content can include, for example, speech recognition that produces a text transcript, or optical character recognition applied to one or more video images of a video stream to produce a text output. A video-based person tracking service that outputs a stream of records of person location and times is another example that can be used to illustrate analysis of an item of content. The locations might be expressed in terms of image coordinates, but may be more useful when expressed in terms of physical world coordinates (e.g., "x,y" coordinates referenced to the floor of a room). Another example that can be used to illustrate an analysis of an item of content pertains to a face detector service that outputs snapshots of faces extracted from a video stream, the times and image locations at which the snapshots were detected, identities for the faces, and/or the classification of the faces. Some portion of this information can be represented as text data.

As used herein, an item of content may have been serviced, may be in the process of being serviced, may not be serviced, or may not yet be serviced. In other words, an item of content, whether serviced or not, can still be referred to as an item of content. Servicing of an item of content can include the analysis or processing of an item of content. When necessary for clarity of discussion, the result of servicing an item of content is referred to herein using terms such as "service result" or "service result content" or "service result data." Service result content may consist of: a modified version of the original serviced item of content (e.g., when background removal is applied to a video stream); an item of content that is derived from the original item of content (e.g., when optical character recognition is used to produce text output); an item of content that is passed through a service provider and is not modified but merely forwarded (e.g., content that does not require transcoding when received by a transcoding service provider); or an item of content that has been previously sent to a service provider and is now cached/stored on the service provider (e.g., content that was previously serviced and is now stored in memory at the service provider). Additionally, service result content may consist of any combination of the above examples.

Continuing with reference to Figure 1, service provider 130 functions to provide one or more types of service. That is, service provider 130 can provide different types of services. For example, service provider 130 can be used for transcoding one item of content and for background removal of another item of content. Different types of services can be performed in parallel on different items of content. That is, service provider 130 can perform a service on different but concurrent content streams. Service provider 130 can also provide caching services. For example, service provider 130 can cache an item of content, in whole or in part, before the item of content is serviced by service provider 130. Similarly, service provider 130 can cache the service result, in whole or in part, before the service result content is forwarded to the client device 150.

Portal 140 is a well-published portal site that serves as the first point of contact between client device 150 and system 100. Service location manager 120 identifies a service provider (e.g., service provider 130) that can perform the type of service that may need to be performed on the item of content before the service result is provided to the client device 150. Content source 110 is the source of the item of content.

System 100 in operation is now more fully described by way of example. At the beginning of a new session, client device 150 sends message 1 to portal 140. Message 1 identifies a particular item of content (e.g., the name of a movie).

Also, in one embodiment, message 1 includes information sufficient for identifying a type of service that should be performed on the item of content before the service result is delivered to client device 150. That information can take many forms. In one form, message 1 specifically identifies a type of service (e.g., background removal or speech recognition). In another form, message 1 identifies attributes of client device 150, such as its memory capacity, screen size, processing capability and the like. Based on these attributes, system 100 (e.g., portal 140) can derive a type of service that should be performed (e.g., transcoding). In yet another form, message 1 identifies the type of client device 150, and based on stored knowledge of that type of device, system 100 (e.g., portal 140) can derive a type of service that should be performed (e.g., transcoding).

Message 1 can include other information. If the source of the item of content is known by client device 150, then the content source can also be identified in message 1. For example, message 1 can include the Uniform Resource Locator (URL) for content source 110. If the source of the item of content is not known to client device 150, the content source can be located by system 100 (e.g., by portal 140) if that information is not already known to system 100.

After receiving message 1, portal 140 sends message 2 to service location manager 120. In one embodiment, message 2 includes information sufficient for identifying a type of service that should be performed on the item of content before the service result is delivered to client device 150. As just described, this information can take many forms. In one form, message 2 specifically identifies a type of service (e.g., background removal or speech recognition). In another form, message 2 identifies attributes of client device 150, such as its memory capacity, screen size, processing capability and the like. Based on these attributes, system 100 (e.g., service location manager 120) can derive a type of service that should be performed (e.g., transcoding). In yet another form, message 2 identifies the type of client device 150, and based on stored knowledge of that type of device; system 100 (e.g., service location manager 120) can derive a type of service that should be performed (e.g., transcoding). Based on the information provided by message 2, service location manager 120 identifies the type of service to be performed.

Message 2 can include other information. For example, message 2 can also identify the item of content and/or the content source.

In the present embodiment, service location manager 120 has knowledge that the type of service identified by message 2 can be performed by service provider 130. After receiving message 2, service location manager 120 sends message 3 to portal 140. Message 3 includes information sufficient for locating and contacting service provider 130. For example, message 3 can include the URL for service provider 130.

Message 3 can include other information. For example, message 3 can also identify the item of content and/or the content source.

After receiving message 3, portal 140 sends message 4 to client device 150. Message 4 includes the information for locating and contacting service provider 130 that was provided by message 3. Message 4 can be identical to message 3 (message 4 may simply be a forwarding of message 3). However, message 4 can include other (additional) information added by portal 140. For example, message 4 can also identify the item of content and/or the content source if that information is determined by portal 140 instead of service location manager 120.

In an alternate embodiment, in lieu of messages 3 and 4, service location manager 120 sends a message directly to client device 150. The message from service location manager 120 to client device 150 includes the information for locating and contacting service provider 130. The message can include other information such as the identity of the item of content and/or the content source.

In any case, client device 150 receives a message that includes information sufficient for locating and contacting service provider 130. Based on that information, communication is established between client device 150 and the service provider 130. In other words, the session initiated by client device 150 is automatically transferred from portal 140 to service provider 130. Importantly, the transfer from portal 140 to service provider 130 is seamless and transparent to an end user at client device 150.

In one embodiment, the message received by client device 150 (e.g., message 4) uses or is based on Synchronized Multimedia Integration Language (SMIL). Redirection of client device 150 from portal 140 to service provider 130 can be accomplished using dynamic SMIL rewriting.

Continuing with the example in view of Figure 1, after receiving message 4 from portal 140 (or an equivalent message from service location manager 120), client device 150 sends message 5 to service provider 130. Message 5 identifies the item of content and the type of service to be performed by service provider 120. Message 5 can include other information. For example, if the content source is known at this point to client device 150, that information can be included in message 5.

Upon receiving message 5, service provider 130 sends message 6 to content source 110. As mentioned above, content source 110 can be identified to service provider 130 in message 5. Otherwise, service provider 130 can locate content source 110. In message 6, service provider 130 requests that the item of content be provided.

In response to message 6, content source 110 sends the item of content to service provider 130 for servicing (illustrated by arrow 7 in Figure 1). In one embodiment, the item of content is streamed to service provider 130.

In one embodiment, service provider 130 is always set up and ready to execute the specified service. That is, the specified service can be continuously executing on service provider 130, waiting for data to operate on. In another embodiment, the specified service is quiescent until either message 5 or the item of content is received by service provider 130. That is, service provider 130 may need to set up or start up the specified service, and will not do so until the potential need for the service is identified or until there is an actual need to perform the service.

In any case, service provider 130 can then perform the specified service on the item of content. The item of content can be cached by service provider 130 in whole or in part before servicing, or the item of content can be serviced as it is received by service provider 130.

The service result content is then sent by service provider 130 to client device 150 (illustrated by arrow 8 in Figure 1). In one embodiment, the service result content is streamed to client device 150. The service result content can be cached by service provider 130 in whole or in part after servicing (before streaming), or the service result content can be streamed as it is serviced by service provider 130.

In the discussion above, the item of content is sent to service provider 130 in response to message 6. As mentioned previously herein, service provider 130 can instead store or cache content previously received and/or serviced, obviating the use of message 6 and the response to message 6 (e.g., obviating the data flow indicated by arrow 7 in Figure 1).

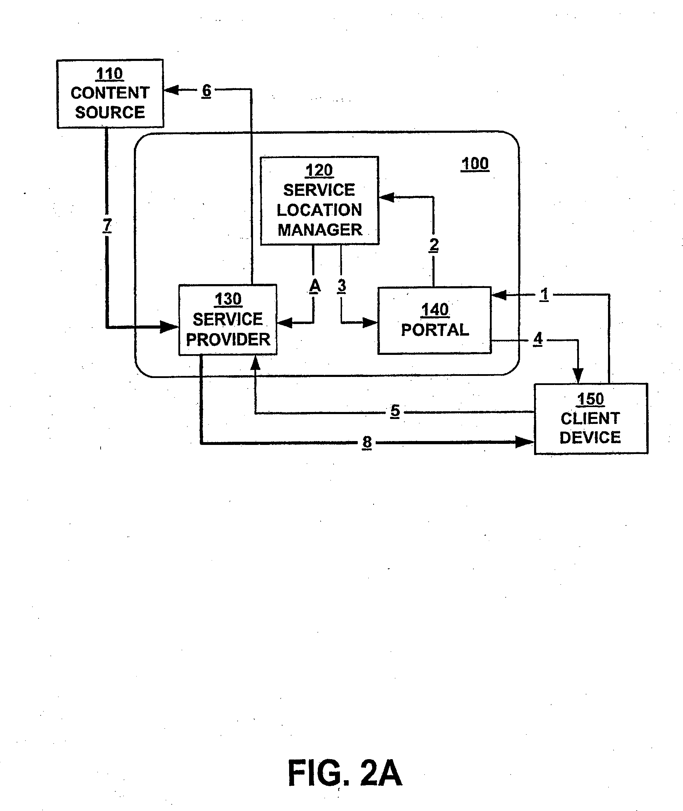

Figure 2A is a block diagram showing information flow in and out of system 100 according to another embodiment of the present invention. A difference between Figure 1 and Figure 2A is the addition of message A from service location manager 120 to service provider 130. The message A can be sent from service location manager 120 to service provider 130 at any time after message 2 and before message 5.

Message A can be used for any number of different purposes. For example, in a situation in which the type of service to be performed on the specified item of content is not continuously executing on service provider 130, message A can be used to alert service provider 130 to the approaching need for the service. Consequently, the set up and/or start up of the service can be initiated and perhaps completed before message 5 is received from client device 150, reducing overall latency.

Also, message A can be used to provide to service, provider 130 the identity of the item of content and perhaps the identity of the content source 110. With this information, service provider 130 can request content source 110 to provide (e.g., begin streaming) the item of content before message 5 is received, further contributing to a reduction in latency. In addition, the use of message A in this manner can result in improved security, because the content source 110 does not have to be identified to the client device 150, for example.

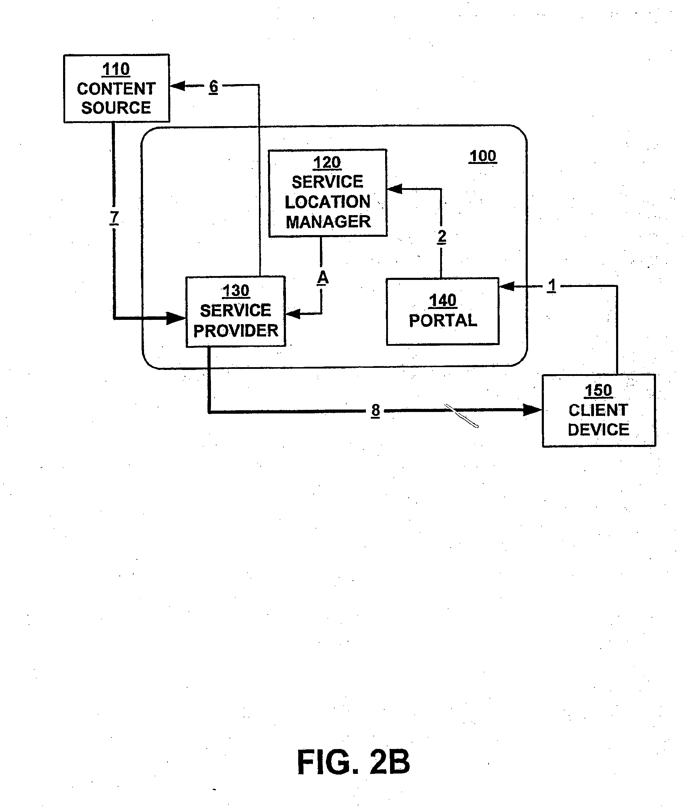

Furthermore, message A can be used in lieu of messages 3, 4 and 5, as illustrated in Figure 2B. For instance, in addition to identifying the item of content and perhaps the content source, message A can also include information enabling service provider 130 to establish communication with client device 150. In other words, instead of having client device 150 initiate the transfer of communication from portal 140 to service provider 130, the transfer of communication can be initiated by service provider 130 in a manner that is still seamless and transparent to a user of client device 150.

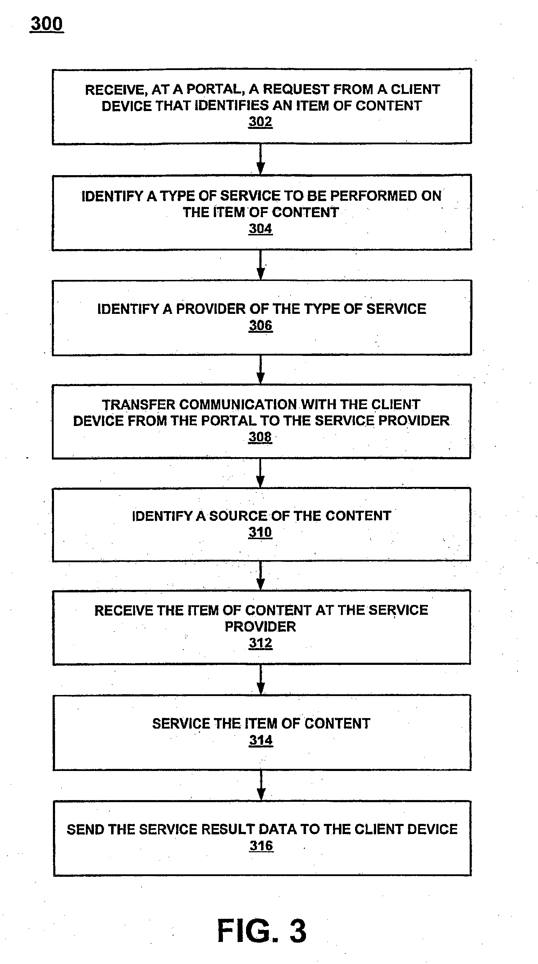

Figure 3 is a flowchart 300 of a method for servicing content and delivering service result content according to one embodiment of the present invention. Although specific steps are disclosed in flowchart 300, such steps are exemplary. That is, embodiments of the present invention are well suited to performing various other steps or variations of the steps recited in flowchart 300. It is appreciated that the steps in flowchart 300 may be performed in an order different than presented, and that not all of the steps in flowchart 300 may be performed.

All of, or a portion of, the methods described by flowchart 300 can be implemented using computer-readable and computer-executable instructions which reside, for example, in computer-usable media of a computer system or like device. In the present embodiment, flowchart 300 is implemented by system 100 of Figures 1 and 2A. That is, some of the steps recited in flowchart 300 are performed by portal 140, others by service location manager 120, and yet others by service provider 130 of Figures 1 and 2A.

In step 302 of Figure 3, a portal receives a request from a client device, identifying an item of content. The request can include other information. In one embodiment, with reference to Figures 1 and 2A, portal 140 receives message 1 from client device 150.

In step 304 of Figure 3, a type of service to performed on the item of content is identified. The type of service can be identified in the request of step 302, or it can be derived based on information provided in that request. Referring to Figures 1 and 2A, the type of service can be identified by the client device 150, by the portal 140, or by the service location manager 120.

In step 306 of Figure 3, a provider of the type of service is identified. In one embodiment, with reference also to Figures 1 and 2A, the service provider (e.g., service provider 130) is identified by service location manager 120.

In step 308 of Figure 3, communication with the client device is transferred from the portal to the service provider.

In step 310, a source of the item of content is identified. Referring to Figures 1 and 2A, the source of the item of content can be identified by the client device 150, by the portal 140, by the service location manager 120, or by the service provider 130. The content source is then contacted to begin delivery of data for the item of content to the service provider.

In step 312 of Figure 3, the item of content is received by (e.g., streamed to) the service provider.

In step 314, the item of content is serviced according to the specified type of service. Data constituting the item of content can be serviced as the data are received at the service provider, or the data can be cached before servicing. As mentioned above, an item of content may have been serviced, may be in the process of being serviced, may not be serviced, or may not yet be serviced. Servicing of an item of content can include the analysis or processing of an item of content. Service result content may consist of: a modified version of the original serviced item of content (e.g., when background removal is applied to a video stream); an item of content that is derived from the original item of content (e.g., when optical character recognition is used to produce text output); an item of content that is passed through a service provider and is not modified but merely forwarded (e.g., content that does not require transcoding when received by a transcoding service provider); or an item of content that has been previously sent to a service provider and is now cached/stored on the service provider (e.g., content that was previously serviced and is now stored in memory at the service provider). Additionally, service result content may consist of any combination of the above examples.

In one embodiment, the service is executed continuously by the service provider. In another embodiment, the service is not set up or does not start operating until the client device establishes communication with the service provider. In yet another embodiment, the service is set up and/or starts up after the service provider is identified by the service location manager, before the client device establishes communication with the service provider. For example, with reference to Figures 2A and 2B, after service location manager 120 identifies service provider 130 as a provider of the specified type of service, a message A is sent to the service provider 130, causing service provider 130 to set up and/or start up the service.

In step 316 of Figure 3, the service result content is sent (e.g., streamed) to the client device. The data constituting the service result can be sent as the input data are serviced, or the service result data can be cached before it is sent.

The steps 312, 314 and 316 can be performed concurrently. That is, service provider 130 (Figures 1 and 2A) can begin servicing of the item of content before the entire item of content is received at service provider 130, and service result data can begin to flow out of service provider 130 before the servicing of the entire item of content is completed. Similarly, the servicing of one portion of an item of content can be in progress while the result of servicing another portion of the item of content is being received by the client device.

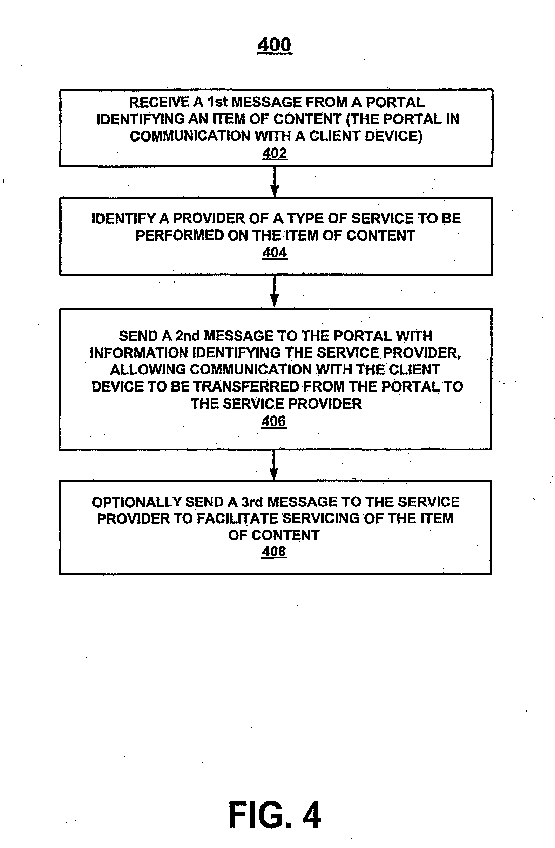

Figure 4 is a flowchart 400 of a method for managing the servicing of content according to one embodiment of the present invention. Although specific steps are disclosed in flowchart 400, such steps are exemplary. That is, embodiments of the present invention are well suited to performing various other steps or variations of the steps recited in flowchart 400. It is appreciated that the steps in flowchart 400 may be performed in an order different than presented, and that not all of the steps in flowchart 400 may be performed.

All of, or a portion of, the methods described by flowchart 400 can be implemented using computer-readable and computer-executable instructions which reside, for example, in computer-usable media of a computer system or like device. In the present embodiment, flowchart 400 is implemented by system 100 of Figures 1 and 2A. Specifically, flowchart 400 is implemented by service location manager 120 of Figures 1 and 2A.

In step 402 of Figure 4, referring also to Figures 1 and 2A, a first message (e.g., message 2) is received from portal 140, identifying an item of content. Portal 140 is in communication with client device 150.

In step 404 of Figure 4, referring also to Figures 1 and 2A, a provider of a type of service to be performed on the item of content is identified (e.g., service provider 130 is identified). The service provider may be identified in the message received from the portal, or it may be derived from information included in that message. In addition, if the source of the item of content is not provided by the first message (e.g., in message 2 of Figures 1 and 2A), then the content source may be identified at this point. Alternatively, the content source can be later identified by the service provider.

In step 406 of Figure 4, in one embodiment, a second message (e.g., message 3 of Figures 1 and 2A) is sent to the portal. In another embodiment, the second message is sent to the client device, bypassing the portal. The second message includes information that identifies the service provider, allowing communication between the client device to be transferred from the portal to the service provider (e.g., from portal 140 to service provider 130 of Figures 1 and 2A).

In step 408 of Figure 4, in one embodiment, a third message (e.g., message A of Figures 2A and 2B) is sent to the service provider. The third message can include the identity of the item of content and/or the identity of the content source. The third message can also be used to alert the service provider, allowing the service provider to begin setting up and/or executing the service (if the service is not already executing). In response to the third message, the service provider can also contact the content source, to initiate delivery (e.g., streaming) of the item of content from the content source to the service provider. In lieu of a third message, the activities just described can begin in response to the client device and the service provider establishing communication. Service result content is then sent (e.g., streamed) from the service provider to the client device.

In summary, embodiments of the present invention provide methods and systems that can provide services to a large number of diverse client devices. A variety of services are provided to accommodate the preferences and requirements of the diverse clients. To avoid congestion, the services are provided by a number of service providers managed by a service location manager. Items of content requested by the client devices are directed to the service providers for servicing. However, the client devices need only contact a well-published portal site to begin a session and to request items of content. The client devices are automatically and transparently transferred to the appropriate service provider during the session. From the perspective of the client device, there is a single point of contact. Transparent to the client device is the flow of messages and data through the content delivery system that results in the delivery of service result content to the client device via a service provider selected by the system. Transparent to the end user at the client device is the seamless transfer of the session from the initial point of contact to the selected service provider.

### MANAGING HANDOFF OF MEDIA SERVICE SESSIONS

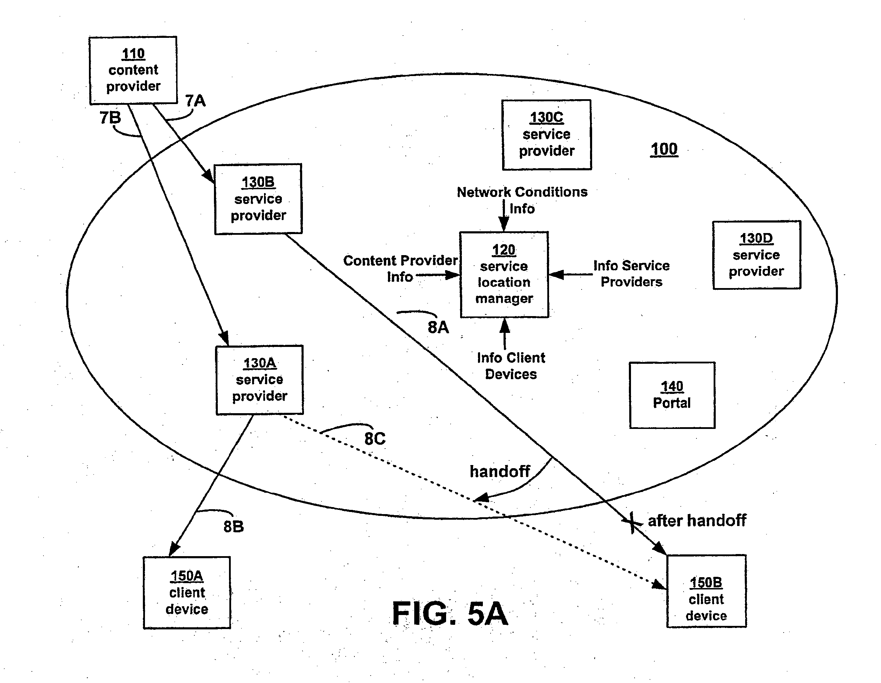

Figure 5A illustrates a system 100 for managing handoff of media service sessions among service providers in accordance with an embodiment of the present invention. Figures 1, 2A, and 2B focused on establishing the media service session represented by arrows 7 and 8, whereas the media service session includes a content source/provider 110, a service provider 130, and a client device 150. However, Figure 5A focuses on managing the handoff of media service sessions from one service provider to another service provider.

As described above, the system 100 includes a plurality of service providers 130A-130D, a service location manager 120 (or service manager), a portal 140, and a plurality of client devices 150A-150B. The functionality of these components is well described above. Additionally, these components are networked together. It should be understood that system 100 can have more than one service location manager 120. Moreover, these components can be implemented in hardware, software, or a combination thereof. In an embodiment, the media service session uses a streaming technique.

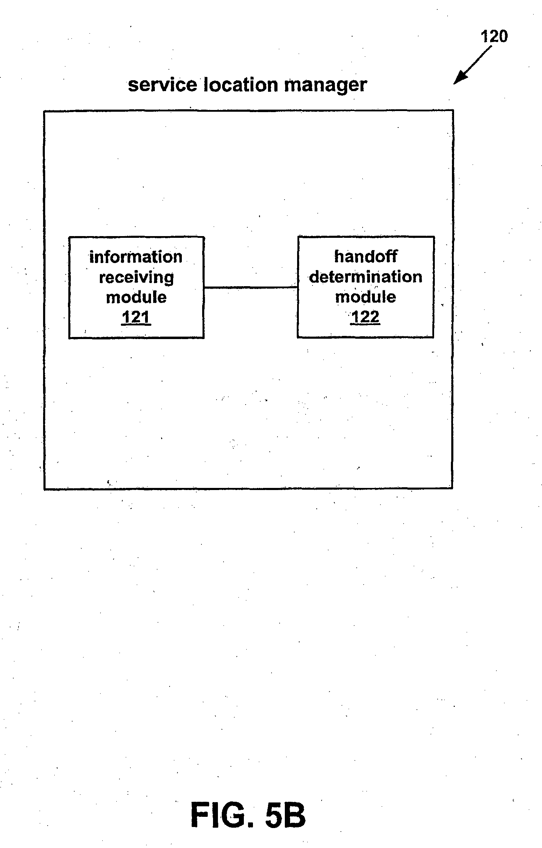

Figure 5B illustrates a block diagram showing a service location manager 120 in accordance with an embodiment of the present invention. As depicted in Figure 5B, the service location manager 120 includes an information receiving module 121 for receiving information, whereas the information relates to the media service sessions. Moreover, the service location manager 120 has a handoff determination module 122 for using the information to determine whether to initiate a handoff of any of the media service sessions from a service provider to another service provider. It should be understood that the service location manager 120 can have other configurations.

In practice, the service location manager 120 manages the handoff of media service sessions among the service providers 130A-130D. Here, there is a first media service session represented by arrows 7A and 8A, whereas the first media service session includes content provider 110, service provider 130B, and client device 150B. Moreover, there is a second media service session represented by arrows 7B and 8B, whereas the second media service session includes content provider 110, service provider 130A, and client device 150A.

As will be fully described below, the service location manager 120 has initiated a handoff of the first media service session from service provider 130B to service provider 130A. Thus, the handoff causes service provider 130A to establish the link 8C with client device 150B, while the service provider 130B. terminates the link 8A with client device 150B. In effect, a third media service session is established and is represented by arrows 7B and 8C, whereas the third media service session includes content provider 110, service provider 130A, and client device 150B.

As depicted in Figure 5A, the service location manager 120 receives a plurality of information relating to the media service sessions. The information can be received at the information receiving module 121 from numerous sources. For example, information is received from the service providers 130A-130D, the client devices 150A-150B, the content provider 110, and from the network conditions of the system 100. The information is any type of information that enables the service location manager 120 to determine whether to initiate handoff of any media service sessions. The service location manager 120 aggregates this information and is able to make better and more intelligent determinations on whether to initiate a handoff of any of the media service sessions from one service provider to another service provider. In particular, the service location manager 120 is able to coordinate the load balancing of the service providers 130A-130D, and to provide the required level of service to high priority client devices and to low priority client devices.

The service location manager 120 uses the information to predict and detect the occurrence of problems that can affect the media service sessions. In an embodiment, the handoff determination module 122 provides this functionality. Hence, the service location manager 120 pro-actively or in anticipation of these problems (e.g., service provider malfunctions, reduced processing speed by a service provider, etc.) initiates handoff of media service sessions among the service providers 130A-130D so that the client device does not experience a reduced quality of service. Moreover, the information enables the service location manager 120 to initiate the handoff before a need for the handoff is absolutely necessary, increasing quality of service and reducing interruptions to the client device. That is, fault tolerance is supported by the system 100.

Furthermore, the service location manager 120 uses the information to determine patterns that enable the service location manager 120 appropriately initiate handoff of the media service sessions. One pattern may indicate the time of day that particular service providers experience excessive loads. Another pattern may indicate network traffic levels throughout the day. The service location manager 120 is able to initiate handoffs of media service sessions from overutilized service providers to underutilized service providers in a coordinated manner throughout the day to avoid overloading service providers and network congestion and bottlenecks.

Moreover, the service location manager 120 is able to determine whether to initiate handoff of media service sessions due to the mobility of the client device. When a client device moves from a position A to a position B, the service location manager 120 may determine to initiate a handoff of the media service session in which the client device is involved due to several reasons. These reasons include increasing quality of service, reducing interruptions to the client device, avoiding overloading the service providers, and avoiding network congestion and bottlenecks.

Additionally, the service location manager 120 is able to determine whether to initiate handoff of media service sessions due to service module migration. As described above, the service providers 130A-130D can provide different types of services. Generally, each service is performed by executing the corresponding service module at the service provider 130A-130D. When a service module currently under execution at a service provider 130B needs to be shut down in order to release resources for other service modules with higher priority, the service location manager 120 may determine to initiate a handoff to migrate the current media service session to another service provider 130A so that the media service session is not interrupted.

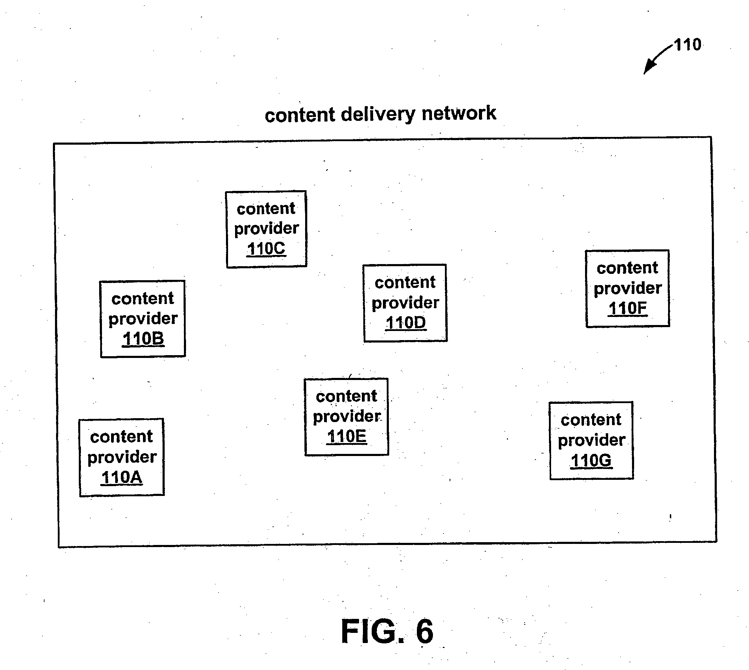

Figure 6 illustrates a content delivery network 110 that can operate with the system 100 of Figure 5A in accordance with an embodiment of the present invention. In Figure 6, the content provider is replaced with a content delivery network 110. The content delivery network 110 includes a plurality of content providers 110A-110G distributed within the content delivery network 110. The service location manager 120 receives information from the content delivery network 110 to enable the service location manager 120 to determine whether to initiate a handoff of a media service session.

If it is assumed in Figures 5A and 6 that the content provider 110A provides the links 7A and 7B to service providers 130A and 130B, the service location manager 120 may initiate a handoff of the media service session from service provider 130B to another service provider if another content provider (e.g., content provider 110G) replaces the content provider 110 for any reason. The service location manager 120 may determine that service provider 130D is closer to the content provider 110G, initiating a handoff from service provider 130B to service provider130D. Thus, this capability increases the quality of service, reduces interruptions to the client device, avoids overloading the service providers, and avoids network congestion and bottlenecks.

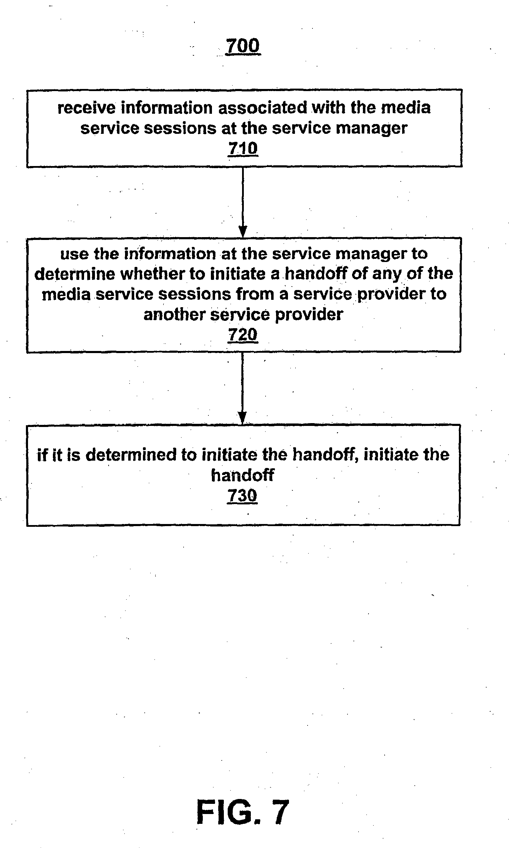

Figure 7 illustrates a flow chart showing a method 700 of managing handoff of media service sessions among service providers in accordance with an embodiment of the present invention. Reference is made to Figures 5A and 6. In an embodiment, the present invention is implemented as computer-executable instructions for performing this method 700. The computer-executable instructions can be stored in any type of computer-readable medium, such as a magnetic disk, CD-ROM, an optical medium, a floppy disk, a flexible disk, a hard disk, a magnetic tape, a RAM, a ROM, a PROM, an EPROM, a flash-EPROM, or any other medium from which a computer can read.

At Step 710, the service location manager 120 receives information associated with the media service sessions from several sources (e.g., service providers 130A-130D, the client devices 150A-150B, the content provider 110, from the network conditions of the system 100, etc.). This information will enable the service location manager 120 to initiate handoffs of the media service sessions among the service providers 130A-130D.

Further at Step 720, the service location manager 120 uses the information received to determine whether to initiate a handoff of any of the media service sessions from a service provider to another service provider. The handoff is intended to increase the quality of service, reduce interruptions to the client device, avoid overloading the service providers, and avoid network congestion and bottlenecks.

Moreover, at Step 730, if the service location manager 120 determines to initiate the handoff, the handoff is initiated between the service providers (e.g., from service provider 130B to service provider 130A).

The foregoing descriptions of specific embodiments of the present invention have been presented for purposes of illustration and description. They are not intended to be exhaustive or to limit the invention to the precise forms, disclosed, and many modifications and variations are possible in light of the above teaching. The embodiments were chosen and described in order to best explain the principles of the invention and its practical application, to thereby enable others skilled in the art to best utilize the invention and various embodiments with various modifications as are suited to the particular use contemplated. It is intended that the scope of the invention be defined by the Claims appended hereto and their equivalents.

## Claims

1. A method (700) of managing handoff of media service sessions among service providers (130A-130D) in a network, said method comprising:
receiving information associated with said media service sessions at a service manager (120);
using said information at said service manager (120) to determine whether to initiate a handoff of any of said media service sessions from a service provider to another service provider and if it is determined to initiate said handoff, initiating said handoff, **characterized by** the using said information comprises determining a pattern that indicates the time of day that particular service providers experience excessive loads or a pattern that indicates network traffic levels throughout the day,
and wherein using said information comprises initiating handoff of media service sessions among the service providers in anticipation of problems that affect the media service sessions.

2. The method (700) as recited in Claim 1 wherein said information includes information received from said service providers (130A-130D) and information associated with location and priority of service modules that are involved in any one of said media service sessions.

3. The method (700) as recited in Claim 1 wherein said information includes information received from any client device (150A-150B) that is involved in any one of said media service sessions.

4. A network system (100) comprising:
a plurality of content providers (110);
a plurality of service providers (130A-130D);
a plurality of client devices (150A-150B), wherein one of said content providers, one of said service providers, and one of said client devices form one of a plurality of media service sessions; and
a service manager (120) for managing handoff of media service sessions among said service providers based on information received, and wherein said service manager (120) uses said information to determine whether to initiate a handoff of any of said media service sessions from a service provider to another service provider,
**characterized by** the service manager being configured to use said information to determine a pattern that indicates the time of day that particular service providers experience excessive loads, or a pattern that indicates network traffic levels throughout the day,
and
wherein the service manager is configured to use said information to initiate handoff of media service sessions among the service providers in anticipation of problems that affect the media service sessions.

5. The network system (100) as recited in Claim 4 wherein said information includes information received from said service providers (130A-130D).

6. The network system (100) as recited in Claim 4 wherein said information includes information received from any client device (150A-150B) that is involved in any one of said media service sessions.

7. The network system (100) as recited in Claim 4 wherein said information includes information associated with network conditions.

8. An apparatus (120) for managing handoff of media service sessions among service providers comprising:
an information receiving module (121) for receiving information;
a handoff determination module (122) for using said information to determine whether to initiate a handoff of any of said media service sessions from a service provider to another service provider, **characterized by** the handoff determination module being
configured to use said information to determine a pattern that indicates the time of day that particular service providers experience excessive loads, or a pattern that indicates network traffic levels throughout the day, and
wherein the apparatus (120) is configured to use said information to initiate handoff of media service sessions among the service providers in anticipation of problems that affect the media service sessions.

9. The apparatus (120) as recited in Claim 8 wherein said information includes information received from said service providers (130A-130D) and information associated with location and priority of service modules that are involved in any one of said media service sessions.

10. The apparatus (120) as recited in Claim 8 wherein said information includes information received from any client device (150A-150B) that is involved in any one of said media service sessions.

## Patentansprüche

1. Verfahren (700) zum Verwalten der Übergabe (Handoff) von Mediendienstsitzungen zwischen Dienstanbietern (130A - 130D) in einem Netzwerk, wobei das Verfahren Folgendes umfasst:
Empfangen von Informationen, die mit den Mediendienstsitzungen in Zusammenhang stehen, bei einem Diensteverwalter (120);
Verwenden der Informationen bei dem Diensteverwalter (120), um zu bestimmen, ob eine Übergabe einer der Mediendienstsitzungen von einem Dienstanbieter zu einem anderen Dienstanbieter auszulösen ist, und wenn bestimmt wurde, dass die Übergabe auszulösen ist, Auslösen der Übergabe, **dadurch gekennzeichnet, dass** die Verwendung der Informationen das Bestimmen eines Musters umfasst, das die Tageszeit anzeigt, zu der bestimmte Dienstanbieter übermäßigen Belastungen unterliegen, oder eines Musters, das den Netzverkehrsumfang über den Tag anzeigt,
und wobei das Verwenden der Informationen das Auslösen einer Übergabe von Mediendienstsitzungen zwischen den Dienstanbietern in Vorwegnahme von Problemen umfasst, welche die Mediendienstsitzungen beeinflussen.

2. Verfahren (700) nach Anspruch 1, wobei die Informationen Informationen beinhalten, die von den Dienstanbietern (130A - 130D) empfangen werden, und Informationen, die mit Standort und Priorität von Dienstmodulen in Zusammenhang stehen, die in eine der Mediendienstsitzungen einbezogen sind.

3. Verfahren (700) nach Anspruch 1, wobei die Informationen Informationen beinhalten, die von einem Client-Gerät (150A - 150B) empfangen werden, das in eine der Mediendienstsitzungen ist.

4. Netzwerksystem (100), Folgendes umfassend:
mehrere Anbieter von Inhalten (110);
mehrere Dienstanbieter (130A - 130D);
mehrere Client-Geräte (150A - 150B), wobei einer der Anbieter von Inhalten, einer der Dienstanbieter und eines der Client-Geräte eine von mehreren Mediendienstsitzungen bilden; und
einen Diensteverwalter (120) zum Verwalten der Übergabe (Handoff) von Mediendienstsitzungen unter Dienstanbietern auf der Grundlage von empfangenen Informationen und wobei der Diensteverwalter (120) die Informationen dazu verwendet zu bestimmen, ob eine Übergabe von einer der Mediendienstsitzungen von einem Dienstanbieter zu einem anderen Dienstanbieter auszulösen ist,
**dadurch gekennzeichnet, dass** der Diensteverwalter dafür konfiguriert ist, die Informationen zu verwenden, um ein Muster zu bestimmen, das die Tageszeit anzeigt, zu der bestimmte Dienstanbieter übermäßigen Belastungen unterliegen, oder ein Muster, das den Netzverkehrsumfang über den Tag anzeigt, und
wobei der Diensteverwalter dafür konfiguriert ist, die Informationen zu verwenden, um die Übergabe von Mediendienstsitzungen zwischen den Dienstanbietern in Vorwegnahme von Problemen auszulösen, welche die Mediendienstsitzungen beeinflussen.

5. Netzwerksystem (100) nach Anspruch 4, wobei die Informationen Informationen beinhalten, die von den Dienstanbietern (130A - 130D) empfangen werden.

6. Netzwerksystem (100) nach Anspruch 4, wobei die Informationen Informationen beinhalten, die von einem Client-Gerät (150A - 150B) empfangen werden, das in eine der Mediendienstsitzungen einbezogen ist.

7. Netzwerksystem (100) nach Anspruch 4, wobei die Informationen Informationen beinhalten, die mit den Netzwerkbedingungen in Zusammenhang stehen.

8. Vorrichtung (120) zum Verwalten der Übergabe (Handoff) von Mediendienstsitzungen zwischen Dienstanbietern, Folgendes umfassend:
ein Informationsempfangsmodul (121) zum Empfangen von Informationen;
ein Übergabebestimmungsmodul (122) zum Verwenden der Informationen zum Bestimmen, ob eine Übergabe einer der Mediendienstsitzungen von einem Dienstanbieter zu einem anderen Dienstanbieter auszulösen ist,
**dadurch gekennzeichnet, dass** es dafür konfiguriert ist, die Informationen zu verwenden, um ein Muster zu bestimmen, das die Tageszeit anzeigt, zu der bestimmte Dienstanbieter übermäßigen Belastungen unterliegen, oder ein Muster, das den Netzverkehrsumfang über den Tag anzeigt, und
wobei die Vorrichtung (120) dafür konfiguriert ist, die Informationen verwenden, um die Übergabe von Mediendienstsitzungen zwischen Dienstanbietern in Vorwegnahme von Problemen auszulösen, die Mediendienstsitzungen beeinflussen.

9. Vorrichtung (120) nach Anspruch 8, wobei die Informationen Informationen beinhalten, die von Dienstanbietern (130A - 130D) empfangen werden, und Informationen, die mit Standort und Priorität von Dienstmodulen in Zusammenhang stehen, die in eine der Mediendienstsitzungen einbezogen sind.

10. Vorrichtung (120) nach Anspruch 8, wobei die Informationen Informationen beinhalten, die von einem Client-Gerät (150A - 150B) empfangen werden, das in eine der Mediendienstsitzungen einbezogen ist.

## Revendications

1. Procédé (700) de gestion de transfert de sessions de services médias entre des prestataires de services (130A-130D) dans un réseau, ledit procédé comprenant les étapes consistant:
à recevoir des informations associées auxdites sessions de services médias au niveau d'un gestionnaire de services (120) ;
à utiliser lesdites informations au niveau dudit gestionnaire de services (120) pour déterminer l'opportunité d'effectuer un transfert de l'une quelconque desdites sessions de services médias d'un prestataire de services à un autre prestataire de services et, s'il est déterminé qu'il faut effectuer ledit transfert, effectuer alors ledit transfert, **caractérisé par** l'utilisation desdites informations, ce qui comprend la détermination d'un modèle qui indique le moment de la journée où des prestataires de services particuliers sont soumis à des charges excessives ou d'un modèle qui indique des niveaux de trafic de réseau au cours de la journée,
et l'utilisation desdites informations comprenant un transfert de sessions de services médias entre les prestataires de services en prévision de problèmes qui affectent les sessions de services médias.

2. Procédé (700) selon la revendication 1, dans lequel lesdites informations comprennent des informations reçues desdits prestataires de service (130A-130D) et des informations associées avec l'emplacement et à la priorité des modules de service qui sont impliqués dans l'une quelconque desdites sessions de services médias.

3. Procédé (700) selon la revendication 1, dans lequel lesdites informations comprennent des informations reçues de tout dispositif client (150A-150B) qui est impliqué dans l'une quelconque desdites sessions de services médias.

4. Système de réseau (100) comprenant :
une pluralité de prestataires de contenus (110) ;
une pluralité de prestataires de services (130A-130D) ;
une pluralité de dispositifs clients (150A-150B), l'un desdits prestataires de contenus, l'un desdits prestataires de service, et l'un desdits dispositifs clients formant l'une d'une pluralité de sessions de services médias ; et
un gestionnaire de services (120) servant à gérer le transfert de sessions de services médias entre lesdits prestataires de services en s'appuyant sur des informations reçues, et ledit gestionnaire de services (120) utilisant lesdites informations pour déterminer l'opportunité d'effectuer un transfert de l'une quelconque desdites sessions de services médias d'un prestataire de services à un autre prestataire de services,
**caractérisé en ce que** le gestionnaire de services est configuré pour utiliser lesdites informations afin de déterminer un modèle qui indique le moment de la journée où des prestataires de services particuliers sont soumis à des charges excessives, ou un modèle qui indique des niveaux de trafic de réseau au cours de la journée, et
le gestionnaire de service étant configuré pour utiliser lesdites informations afin d'effectuer un transfert de sessions de services médias entre les prestataires de services en prévision de problèmes qui affectent les sessions de services médias.

5. Système de réseau (100) selon la revendication 4, dans lequel lesdites informations comprennent des informations reçues desdites prestataires de service (130A-130D).

6. Système de réseau (100) selon la revendication 4, dans lequel lesdites informations comprennent des informations reçues de tout dispositif client (150A-150B) qui est impliqué dans l'une quelconque desdites sessions de services médias.

7. Système de réseau (100) selon la revendication 4, dans lequel lesdites informations comprennent des informations associées aux conditions du réseau.

8. Appareil (120) servant à gérer le transfert de sessions de services médias entre des prestataires de services comprenant :
un module de réception d'informations (121) destiné à recevoir des informations ;
un module de détermination de transfert (122) destiné à utiliser lesdites informations pour déterminer l'opportunité d'effectuer un transfert de l'une quelconque desdites sessions de services médias d'un prestataire de services à un autre prestataire de services, **caractérisé en ce que** le module de détermination de transfert est configuré pour utiliser lesdites informations afin de déterminer une modèle qui indique le moment de la journée où des prestataires de services particuliers sont soumis à des charges excessives, ou un modèle qui indique les niveaux de trafic de réseau au cours de la journée, et
l'appareil (120) étant configuré pour utiliser lesdites informations afin d'effectuer un transfert de sessions de services médias entre les prestataires de services en prévision de problèmes qui affectent les sessions de services médias.

9. Appareil (120) selon la revendication 8, dans lequel lesdites informations comprennent des informations reçues desdits prestataires de service (130A-130D) et des informations associées à l'emplacement et à la priorité des modules de service qui sont impliqués dans l'une quelconque desdites sessions de services médias.

10. Appareil (120) selon la revendication 8, dans lequel lesdites informations comprennent des informations reçues de tout dispositif client (150A-150B) qui est impliqué dans l'une quelconque desdites sessions de services médias.
